# EUROPÄISCHE PATENTSCHRIFT

(11) **EP 3 918 917 B1**
(45) Veröffentlichungstag und Bekanntmachung des Hinweises auf die Patenterteilung: **14.10.2026**
(21) Anmeldenummer: 21177781.8
(22) Anmeldetag: 04.06.2021
(51) Int. Cl.: A01N 59/02, A01P 7/04, A01N 59/00, A01N 59/06

(54) **BEKÄMPFUNG VON ERDFLÖHEN**
CONTROL OF FLEA BEETLES
LUTTE CONTRE LES PUCES DE TERRE

(30) Priorität: 05.06.2020 EP 20178417
(43) Veröffentlichungstag der Anmeldung: 08.12.2021
(73) Patentinhaber: GFR Gesellschaft für die Aufbereitung und Verwertung von Reststoffen mbH, 97080 Würzburg (DE)
(72) Erfinder: GERSTNER, Erwin, 97318 Kitzingen (DE); ZARNECKOW, Ilja, 97900 Külsheim (DE)
(74) Vertreter: dompatent

(56) Entgegenhaltungen:
- WO-A1-2016/202656
- WO-A1-2019/060217
- DE-A1- 3 243 573
- DE-C- 653 089
- DE-C- 857 604
- FR-A- 401 417
- GB-A- 582 042
- US-A- 2 165 206
- .: "Technische Informationen: Calciumsulfat Dihydrat", DATENBLATT, 1 August 2017 (2017-08-01), Germany, pages 1 - 1, XP055841611, Retrieved from the Internet <URL:https://krone-gips.de/downloads/technische-informationen/routedownload/calciumsulfat-dihydrat-feed-ti.html> [retrieved on 20210916]
- .: "Technische Informationen: Anhydrit F (Calciumsulfat wasserfrei)", DATENBLATT, 1 July 2016 (2016-07-01), Germany, pages 1 - 1, XP055841623, Retrieved from the Internet <URL:https://krone-gips.de/downloads/technische-informationen/routedownload/anhydrit-f-ti.html> [retrieved on 20210916]
- .: "Perlite Volcanic Glass as a Hollow Microsphere Filler (Formerly Perlite-Lightweight Hollow Spheres)", 1 January 2009 (2009-01-01), U.S.A., pages 1 - 2, XP055841663, Retrieved from the Internet <URL:https://www.europerl.com/fileadmin/downloads/Europerl/Allgemein/Andere_Sprachen/English_2009/Perlite_volcanic_glass_as_a_hollow_microsphere_filler.pdf> [retrieved on 20210916]
- .: "BioLapis neu (Calciumsulfat-Steinmehl)", 11 September 2019 (2019-09-11), Germany, pages 1 - 1, XP055841745, Retrieved from the Internet <URL:https://www.natursinn.de/wp-content/uploads/2019/09/BioLapis-Schwefeldünger.pdf> [retrieved on 20210916]
- EDLER NICOLE: "Themen: Erdflöhe", MEIN SCHÖNER GARTEN, 12 April 2018 (2018-04-12), Germany, pages 1 - 4, XP055842077, Retrieved from the Internet <URL:https://www.mein-schoener-garten.de/erdfloehe> [retrieved on 20210917]
- DANIEL CLAUDIA ET AL: "Plant protection in organic production of Brassica vegetables and oilseed rape", IOBC-WPRS BULLETIN, 1 January 2016 (2016-01-01), pages 110 - 115, XP055842103, Retrieved from the Internet <URL:https://orgprints.org/id/eprint/32316/1/2016_IOBCBrassicaVegetables.pdf> [retrieved on 20210917]
- .: "IV Lausizisches Oekonomisches Intelligenzblatt - 1) Nachrichten: Verwendung von Gips in Flachs gegen Erdflöhe", LAUSIZISCHE MONATSSCHRIFT, ERSTER TEIL, ERSTES BIS SECHSTES STÜCK, 1 January 1797 (1797-01-01), Görlitz, Kgreich Sachsen, pages 602 - 603, XP93098424, Retrieved from the Internet <URL:https://www.google.de/books/edition/Lausizische_Monatsschrift/ZVxmAAAAcAAJ?hl=en&gbpv=1> [retrieved on 20231106]
- .: "Erdflöhe richtig bekämpfen", 23 May 2012 (2012-05-23), pages 1, XP093251021, Retrieved from the Internet <URL:https://www.tegut.com/saisongarten-einzelartikel/erdfloehe-richtig-bekaempfen.html>

## Beschreibung

Gegenstand der vorliegenden Erfindung ist ein Verfahren zur Kontrolle oder Bekämpfung von Erdflöhen sowie ein Mittel hierfür.

Erdflöhe *(Psylliodes)* sind eine Gattung der Flohkäfer aus der Familie der Blattkäfer, sowohl die Käfer als auch die Larven sind pflanzenfressend.

Es existieren verschiedene Arten, die sich an verschiedene Familien von Pflanzen angepasst haben. Als landwirtschaftliche Schädlinge sind sie insbesondere beim Hopfen, Hanf, bei Nachtschattengewächsen und bei Kohl problematisch.

Es können sich mehrere Generationen pro Jahr entwickeln; die Käfer können im Boden oder in der Streu überwintern.

Die Schäden zeigen sich durch kleine, 1 bis 2 mm große, meist rundliche Löcher in den Blättern. Insbesondere wenn sie Jungpflanzen befallen, können Erdflöhe so viel Blattfläche fressen, dass die Pflanzen eingehen.

Konventionell wird der Erdfloh, insbesondere der Rapserdfloh, mit Insektiziden auf Basis von Pyrethroiden bekämpft. Im biologischen Anbau wird teilweise auf Schutznetze mit Maschenweiten von 0,8 mm gesetzt.

Der Einsatz von Insektiziden ist grundsätzlich nicht wünschenswert. Die Verwendung von Netzen ist mühsam und aufwendig. Es besteht daher Bedarf nach weiteren Mitteln Erdflöhe zu kontrollieren oder zu bekämpfen.

Die Lausizische Monatsschrift vom September 1797 beschreibt im Kapitel IV. "Lausizisches Oekonomisches Intelligenzblatt" unter dem Abschnitt 1) "Nachrichten: Verwendung von Gips in Flachs gegen Erdflöhe" die Verwendung von 200 Pfund fein gemahlenem Gips auf den Scheffel mit Leinsaat (Flachs) bebauten Landes durch einen schlesischen Landwirt zur Bekämpfung des Erdflohs. Diese Behandlung wurde an acht Tagen wiederholt.

Aufgabe der vorliegenden Erfindung war es, entsprechende Verfahren bereitzustellen.

Gelöst wird die Aufgabe durch ein Verfahren zur Kontrolle oder Bekämpfung von Erdflöhen umfassend den Schritt:
- Aufbringen von aufgemahlenem Calciumsulfat, auf eine Bodenfläche oder in einen Pflanzenbestand, wobei die Erdflöhe Hopfenerdflöhe, Rapserdflöhe, Hanferdflöhe, Kohlerdflöhe oder Kartoffelerdflöhe sind,
- und wobei die d₅₀-Volumenkorngröße des Calciumsulfats, bestimmt durch Laserbeugung mit Nassdispergierung, im Bereich von 5 bis 15 µm liegt.

Als Erdflöhe können erfindungsgemäß Hopfenerdflöhe, Rapserdflöhe, Hanferdflöhe, Kohlerdflöhe oder Kartoffelerdflöhe kontrolliert oder bekämpft werden.

Es können sowohl wasserfreies Calciumsulfat als auch Calciumsulfat mit zwei Kristallwassermolekülen eingesetzt werden. Entsprechende Verbindungen werden als Anhydrit (Calciumsulfat wasserfrei) oder als Gips (Calciumsulfat-Dihydrat) bezeichnet. Auch Mischungen aus Anhydrit und Gips sind geeignet. Grundsätzlich kann das Calciumsulfat auch Anteile anderer Stoffe enthalten. Bevorzugt sind mindestens 80 Gew.-% des Produktes Calciumsulfat in Form von Anhydrit und/oder Dihydrat.

Das Calciumsulfat muss in aufgemahlener Form eingebracht werden. Aufgemahlen bedeutet eine d₅₀-Korngröße ≤ 100 µm. Erfindungsgemäß ist eine d₅₀-Volumenkorngröße von 5 bis 15 µm. Insbesondere für Calciumsulfat ist eine d₅₀-Volumenkorngröße von 5 - 15 µm besonders geeignet.

In einigen Ausführungsformen ist der d₇₀-Wert <125 µm.

In einigen Ausführungsformen ist der d₉₇-Wert <100 µm.

Der d₅₀-Wert bezeichnet die Korngröße, bei der 50 Vol.-% des Minerals eine größere Korngröße und 50 Vol.-% des Minerals eine kleinere Korngröße aufweisen. Solche d₅₀-Verteilungen lassen sich in einfacher Weise durch Laserbeugung mit Nassdispergierung bestimmen. d₇₀-(70 Vol.-% < x) bzw d₉₇-Werte (97 Vol.-% < x) werde analog aus entsprechenden Messungen bestimmt.

Im Falle von Calciumsulfat oder Mischungen mit Calciumsulfat können auf eine Bodenfläche oder in den Pflanzenbestand bevorzugt ca. 30 bis 150 g/m² aufgebracht werden. Zum Aufbringen eignen sich insbesondere Schnecken-, Schleuder- oder Pendelstreuer.

In einigen Anwendungsfällen ist es sinnvoll, das Aufbringen zu wiederholen, beispielsweise im Abstand von 7 bis 28 Tagen. Das Aufbringen kann auch mehrfach erfolgen.

Da Erdflöhe besonders an Jungpflanzen aktiv sind, ist es zu empfehlen, dass die erste Behandlung bereits mit dem Aufgehen der Pflanze erfolgt. Sie könnte z.B. bis nach der Blüte erfolgen. Das Aufbringen kann auch wiederholt während der gesamten Vegetationszeit erfolgen.

Typisch ist die Anwendung insbesondere auf Bodenflächen, die mit Hopfen, Rüben, Raps, Hanf, Kartoffeln oder Kohlarten bepflanzt sind.

Das Mittel zur Kontrolle oder Bekämpfung von Erdflöhen kann weitere Zusätze aufweisen, insbesondere anorganische Stoffe wie z. B. Gesteinsmehle, Kalkmehle oder Tonmehle.

Bevorzugt enthält das Mittel eine freie Feuchte ≤ 2,0 MA-%, bevorzugt ≤ 1,0 MA-%, mehr bevorzugt ≤ 0,2 MA-%. Mit freier Feuchte ist im Gegensatz zum chemisch gebundenen Kristallwasser (Hydratwasser) die tatsächliche Feuchte, d. h., der Gehalt an nicht chemisch gebundenem Wasser, gemeint. Die freie Feuchte wird durch Trocknung der Probe bei Temperaturen unterhalb der Temperatur bestimmt, bei der bereits Kristallwasser ausgetrieben würde. In der Regel erfolgt die Bestimmung der freien Feuchte daher durch Trocknung der Probe bei 40 - 60 °C.

Die Erfindung wird durch die nachfolgenden Beispiele näher erläutert:

### Beispiel 1:

Calciumsulfat-Anhydrit wurde aufgemahlen und hatte eine d₅₀-Volumenkorngröße von 10 µm. Der Anhydritstaub wurde mittels Pendelstreuer auf eine Ackerfläche, die mit Hopfen bepflanzt war, aufgebracht. Dabei wurde zur Erzielung einer optimalen Wirkung besonders auf eine gleichmäßige und möglichst vollständige Bestäubung aller Pflanzenteile geachtet.

Die Ausbringung erfolgte im Juni in einen bereits stark vom Hopfenerdfloh befallenen Bestand in einer Menge von 500 kg/ha (entsprechend 50 g/m²). Die Anwendung wurde nach mehreren Tagen in gleicher Menge wiederholt. Der Erdfloh war verschwunden und es konnte trotz der Vorschädigung noch eine gute Hopfenernte eingebracht werden. Ohne die Behandlung mit Anhydritstaub wäre die Hopfenernte verloren gewesen.

### Beispiel 2:

Calciumsulfat-Anhydrit wurde aufgemahlen und hatte eine d₅₀-Volumenkorngröße von 10 µm. Der Anhydritstaub wurde im April prophylaktisch auf eine Ackerfläche, die mit Hopfen bepflanzt war, in einer Menge von 300 kg/ha aufgebracht: Es konnte in der Folgezeit kein nennenswerter Befall mit dem Erdfloh beobachtet werden.

## Patentansprüche

1. Verfahren zur Kontrolle oder Bekämpfung von Erdflöhen umfassend den Schritt:
- Aufbringen von aufgemahlenem Calciumsulfat, auf eine Bodenfläche oder in einen Pflanzenbestand, wobei die Erdflöhe Hopfenerdflöhe, Rapserdflöhe, Hanferdflöhe, Kohlerdflöhe oder Kartoffelerdflöhe sind, wobei die d₅₀-Volumenkorngröße des Calciumsulfats, bestimmt durch Laserbeugung mit Nassdispergierung, im Bereich von 5 bis 15 µm liegt.

2. Verfahren nach Anspruch 1, wobei das Calciumsulfat ausgewählt wird aus Gips (Calciumsulfat-Dihydrat) oder Anhydrit (Calciumsulfat).

3. Verfahren nach Anspruch 1 oder 2, wobei das Calciumsulfat natürlichen oder industriellen Ursprungs sein kann.

4. Verfahren nach einem der Ansprüche 1 bis 3, wobei 30 bis 150 g/m² Bodenfläche aufgebracht werden.

5. Verfahren nach einem der Ansprüche 1 bis 4, wobei das Aufbringen im Abstand von 7 bis 28 Tagen, gegebenenfalls auch mehrmals, wiederholt wird.

6. Verfahren nach einem der Ansprüche 1 bis 5, wobei das Aufbringen vom Aufgehen der Pflanze bis nach der Blüte erfolgt.

7. Verfahren nach einem der Ansprüche 1 bis 5, wobei das Aufbringen während der gesamten Vegetationszeit oder vor der Einsaat erfolgt.

8. Verfahren nach einem der Ansprüche 1 bis 7, wobei die Bodenfläche mit Hopfen, Rüben, Raps, Hanf, Kartoffeln oder Kohlarten, bepflanzt ist.

9. Verfahren nach einem der der Ansprüche 1 bis 8, wobei die freie Feuchte des Calciumsulfats ≤ 2,0 MA-%, bevorzugt ≤ 0,2 MA-% beträgt.

## Claims

1. A method for controlling flea beetles, comprising the step of:
- applying ground calcium sulfate to a soil surface or to plants growing thereon, wherein said flea beetles are hop flea beetles, rape flea beetle, hemp flea beetles, cabbage stem flea beetles, or potato flea beetles, wherein the d₅₀ volume particle size of the calcium sulfate, determined by laser diffraction with wet dispersion, is in the range of from 5 to 15 µm.

2. The method according to claim 1, wherein said calcium sulfate is selected from gypsum (calcium sulfate dihydrate) or anhydrite (calcium sulfate).

3. The method according to claim 1 or 2, wherein said calcium sulfate may be of natural or industrial origin.

4. The method according to any of claims 1 to 3, wherein 30 to 150 g is applied per m² of soil area.

5. The method according to any of claims 1 to 4, wherein said applying is repeated at an interval of 7 to 28 days, optionally several times.

6. The method according to any of claims 1 to 5, wherein said applying is performed from the time the plant emerges until after flowering.

7. The method according to any of claims 1 to 5, wherein said applying is performed throughout the vegetation period, or before sowing.

8. The method according to any of claims 1 to 7, wherein said soil surface has been planted with hop, beet, rape, hemp, potatoes or cabbage varieties.

9. The method according to any of claims 1 to 8, wherein the free moisture content of the calcium sulfate is ≤ 2.0% by mass, preferably ≤ 0.2% by mass.

## Revendications

1. Procédé pour le contrôle ou la lutte contre les puces de terre, comprenant l'étape consistant à :
- épandre du sulfate de calcium moulu sur une surface au sol ou dans une culture, dans lequel les puces de terre sont des altises du houblon, altises du colza, altises du chanvre, altises du chou ou altises de la pomme de terre, dans lequel la granulométrie d₅₀ en volume du sulfate de calcium, déterminée par diffraction laser avec dispersion humide, est comprise dans la plage allant de 5 à 15 µm.

2. Procédé selon la revendication 1, dans lequel le sulfate de calcium est choisi parmi le gypse (sulfate de calcium dihydraté) ou l'anhydrite (sulfate de calcium).

3. Procédé selon la revendication 1 ou 2, dans lequel le sulfate de calcium peut être d'origine naturelle ou industrielle.

4. Procédé selon l'une des revendications 1 à 3, dans lequel 30 à 150 g/m² de surface au sol sont épandus.

5. Procédé selon l'une des revendications 1 à 4, dans lequel l'épandage est répété, éventuellement plusieurs fois, à des intervalles de 7 à 28 jours.

6. Procédé selon l'une des revendications 1 à 5, dans lequel l'épandage est effectué de la levée de la plante jusqu'après la floraison.

7. Procédé selon l'une des revendications 1 à 5, dans lequel l'épandage est effectué pendant toute la période de végétation ou avant l'ensemencement.

8. Procédé selon l'une des revendications 1 à 7, dans lequel la surface au sol est une plantation de houblon, betteraves, colza, chanvre, pommes de terre ou choux.

9. Procédé selon l'une des revendications 1 à 8, dans lequel l'humidité libre du sulfate de calcium est ≤ 2,0 % en masse, de préférence ≤ 0,2 % en masse.
